# FASCICULE DE BREVET EUROPEEN

(11) **EP 3 079 929 B1**
(45) Date de publication et mention de la délivrance du brevet: **03.02.2021**
(21) Numéro de dépôt: 14821773.0
(22) Date de dépôt: 02.12.2014
(51) Int. Cl.: B60H 1/00, B60H 1/03, B60H 1/22

(54) **PROCÉDÉ ET DISPOSITIF DE CHAUFFAGE D'UN HABITACLE DE VÉHICULE**
VERFAHREN UND VORRICHTUNG ZUM BEHEIZEN EINES FAHRGASTRAUMES EINES KRAFTFAHRZEUGS
METHOD AND DEVICE FOR HEATING A VEHICLE PASSENGER COMPARTMENT

(30) Priorité: 11.12.2013 FR 1362384
(43) Date de publication de la demande: 19.10.2016
(73) Titulaire: Renault S.A.S., 92100 Boulogne-Billancourt (FR)
(72) Inventeur: SAINT-LEGER, Gerard, F-78000 Versailles (FR); CHIOVETTA, Bruno, F-78700 Conflans (FR)
(86) Numéro de dépôt international: PCT/FR2014/053113
(87) Numéro de publication internationale: WO 2015/086950

(56) Documents cités:
- EP-A1- 1 526 018
- EP-A1- 2 567 840
- DE-A1-102012 019 459
- FR-A1- 2 966 580

## Description

L'invention concerne un procédé de climatisation, notamment de chauffage d'un habitacle de véhicule qui comporte un organe de climatisation, notamment de chauffage électrique d'un fluide caloporteur, procédé comprenant une étape d'activation de l'organe électrique.

L'invention concerne aussi un dispositif de climatisation, notamment de chauffage d'un habitacle de véhicule comprenant un organe de climatisation, notamment de chauffage électrique de fluide caloporteur.

On connait déjà des dispositifs de climatisation d'un habitacle de véhicule comprenant un organe électrique de climatisation, notamment de chauffage d'un fluide caloporteur circulant dans un radiateur logé dans l'habitacle.

Le document EP2607120 divulgue par exemple un organe de chauffage électrique disposé dans le compartiment moteur, isolé par une paroi de sécurité de l'habitacle. Les calories générées par l'organe de chauffage électrique sont diffusées dans un radiateur logé dans l'habitacle par circulation de fluide caloporteur du compartiment moteur vers l'habitacle. La solution proposée dans ce document antérieur nécessite une circulation de fluide en provenance du compartiment moteur avec risque d'y dissiper des calories qui sont perdues pour l'habitacle.

De manière générale, les techniques connues s'orientent essentiellement vers des procédés et dispositifs alimentant en permanence un organe électrique de climatisation lorsque le groupe motopropulseur ne peut pas fournir les calories ou les frigories nécessaires à la climatisation.

L'inconvénient est dans une baisse de rendement énergétique global résultant de la fourniture d'électricité nécessaire.

Pour remédier aux problèmes de l'état antérieur de la technique, l'invention a pour objet un procédé de chauffage d'un habitacle de véhicule comportant un organe de chauffage électrique d'un fluide caloporteur circulant dans un radiateur logé dans l'habitacle, comprenant une étape d'activation dudit organe de chauffage électrique, une étape de détection de conditions d'optimisation de fonctionnement d'un autre organe du véhicule qui enclenche ladite étape d'activation lorsque les dites conditions sont détectées.

Le document DE102012019459 divulgue une résistance additionnelle de chauffage alimentée par un générateur de récupération d'énergie en phase de freinage du véhicule. La solution divulguée a pour inconvénient de nécessiter un freinage du véhicule.

L'objet de l'invention permet de pallier cet inconvénient en appliquant des conditions d'optimisation qui concernent celles liées à un couple de fonctionnement minimal du moteur pour obtenir un meilleur rendement énergétique et/ou antipollution.

Avantageusement, l'organe électrique activé est immergé dans le radiateur.

Avantageusement aussi, lesdites conditions d'optimisation concernent un ordre de ralentissement du véhicule.

Particulièrement lorsqu'une partie du fluide caloporteur est utilisée dans un circuit de refroidissement d'un groupe motopropulseur du véhicule, une étape de vérification de température du circuit de refroidissement supérieure ou égale à une température de seuil motopropulseur, enclenche directement ou indirectement ladite étape de détection lorsque ladite température du circuit de refroidissement n'est pas supérieure ou égale à une température de seuil motopropulseur.

Plus particulièrement, une étape de fermeture d'une vanne permet d'empêcher la partie du fluide caloporteur utilisée dans le circuit de refroidissement de pénétrer dans l'habitacle.

De préférence, une étape complémentaire d'activation de moyens de chauffage électrique indépendante de ladite étape de détection est enclenchée lorsqu'une température du radiateur de l'habitacle n'est pas supérieure ou égale à une température de seuil bas.

L'invention a aussi pour objet un programme d'ordinateur comprenant des instructions de code de programme pour l'exécution des étapes du procédé selon l'invention lorsque ledit programme est exécuté sur un ou plusieurs ordinateurs.

L'invention a encore pour objet un dispositif de chauffage d'un habitacle de véhicule comprenant un organe de chauffage électrique d'un fluide caloporteur, caractérisé en ce qu'il comporte au moins un ordinateur de bord comprenant un programme d'ordinateur structuré pour activer ledit organe de chauffage électrique lorsque des conditions d'optimisation de fonctionnement d'un autre organe du véhicule sont détectées.

Avantageusement, l'organe électrique est immergé dans le radiateur.

Avantageusement aussi, le dispositif comprend un alternateur piloté par l'ordinateur de façon à alimenter ledit organe de chauffage électrique lorsque le véhicule reçoit un ordre de ralentissement.

Particulièrement, le dispositif comprend un circuit de refroidissement d'un groupe motopropulseur utilisant une partie du fluide caloporteur, un capteur de température du circuit de refroidissement connecté à l'ordinateur pour autoriser d'activer ledit organe de chauffage électrique lorsque le capteur n'indique pas une valeur de température du circuit de refroidissement supérieure ou égale à une température de seuil motopropulseur.

Plus particulièrement, le dispositif comprend une vanne de fermeture pilotée directement ou indirectement par l'ordinateur pour empêcher la partie du fluide caloporteur utilisée dans le circuit de refroidissement de pénétrer dans l'habitacle lorsque ledit organe de chauffage électrique est activé.

De préférence, le dispositif comprend un capteur de température du radiateur de l'habitacle connecté à l'ordinateur pour activer les moyens de chauffage électrique indépendamment des conditions d'optimisation de fonctionnement dudit autre organe du véhicule lorsqu'une température du radiateur de l'habitacle n'est pas supérieure ou égale à une température de seuil bas.

D'autres caractéristiques et avantages de l'invention apparaitront au cours de la lecture de la description détaillée qui va suivre pour la compréhension de laquelle on se reportera aux dessins annexés parmi lesquels :
- la figures 1 est un schéma qui représentent un dispositif de chauffage d'un habitacle de véhicule conforme à l'invention ;
- la figure 2 est un organigramme qui montre des étapes de procédé conforme à l'invention.

Dans la suite de la description, des éléments présentant une structure identique ou des fonctions analogues seront désignés par un même numéro de référence.

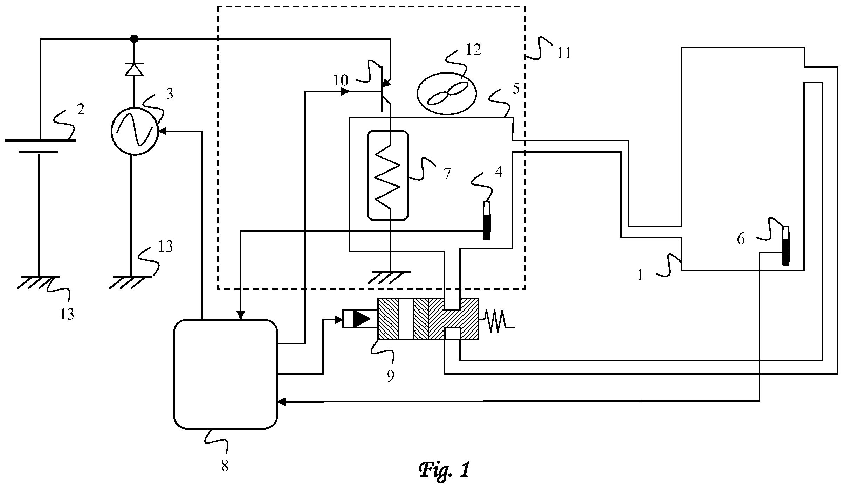

Le dispositif illustré par la figure 1 comprend un organe 7 de chauffage électrique d'un fluide caloporteur pour procurer le chauffage d'un habitacle 11 de véhicule.

L'organe 7 de chauffage électrique est de type thermoplongeur immergé dans le fluide caloporteur contenu dans un radiateur 5 sur lequel, par exemple un ventilateur 12 souffle de l'air frais qui, par son passage sur le radiateur 5, se réchauffe avant de se répandre dans l'habitacle 11.

Un alternateur 3 entraîné par un groupe motopropulseur du véhicule, permet de produire un courant électrique de manière connue en soi, notamment pour recharger une batterie 2 avec laquelle il est connecté en parallèle par rapport à une masse 13 partagée du véhicule.

Un interrupteur 10 est commandé par un ordinateur de bord 8 pour activer et désactiver l'organe 7 de chauffage électrique en le connectant et respectivement le déconnectant de l'alternateur 3. De manière à ne pas décharger rapidement la batterie, il est préférable de faire débiter l'alternateur, en d'autres termes de faire fonctionner le groupe motopropulseur pour activer l'organe 7.

Le dispositif de chauffage expliqué à présent, est particulièrement intéressant en ce que l'ordinateur de bord 8 comprend un programme d'ordinateur structuré pour activer l'organe 7 de chauffage électrique lorsque des conditions d'optimisation de fonctionnement d'un autre organe du véhicule sont détectées, notamment en termes de consommation électrique.

Par exemple, lorsque le véhicule reçoit un ordre de ralentissement généralement en provenance du conducteur qui relâche la pédale d'accélérateur, avant si besoin est d'appuyer sur la pédale de frein, l'énergie cinétique est habituellement dissipée principalement sous forme de chaleur à l'extérieur de l'habitacle 11. Dans un premier temps, le relâchement de la pédale d'accélérateur provoque une coupure de l'injection de carburant dans un moteur thermique qui oppose alors une résistance à l'entraînement des roues en combinaison avec la résistance des forces aérodynamiques de l'air, des forces de contact sur la chaussée et de divers forces de frottement. Si les freins sont actionnés, des forces de frottement plus intenses sont ajoutées de façon à ralentir le véhicule plus vigoureusement. Par ces forces de résistance, l'énergie cinétique est dissipée essentiellement sous forme de chaleur en pures pertes à l'extérieur de l'habitacle 11.

Une condition d'optimisation n'entrant pas dans le cadre de la présente invention est dans ce cas de récupérer au moins une partie de l'énergie cinétique sous forme d'énergie électrique en pilotant l'alternateur 3 de façon à lui faire produire un courant électrique, par exemple pour recharger la batterie 2. Le problème est que l'énergie cinétique à convertir en cas de ralentissement du véhicule est souvent considérablement supérieure à ce que peut absorber la batterie 2, notamment lorsque celle-ci est chargée. Le dispositif et le procédé décrits plus en détail ci-dessous, permettent d'exploiter une source d'énergie gratuite, à savoir l'énergie cinétique disponible lors d'un ralentissement du véhicule pour chauffer l'habitacle en cas de besoin.

D'autres conditions d'optimisation peuvent exister comme , suivant la présente invention, celles liées à un couple de fonctionnement minimal du moteur pour obtenir un meilleur rendement énergétique et/ou antipollution. Ici encore, en faisant fonctionner le groupe motopropulseur à un couple supérieur à celui nécessaire pour simplement entraîner le véhicule, il est intéressant de récupérer l'énergie produite sous forme électrique au moyen de l'alternateur 3 piloté en conséquence par l'ordinateur 8, de façon à alimenter l'organe 7 de chauffage électrique lorsque c'est utile.

Ceci est considérablement utile au début du roulage du véhicule par temps froid alors que le groupe motopropulseur n'a pas encore fonctionné suffisamment pour chauffer.

Habituellement, un dispositif de chauffage de véhicule, notamment de véhicule automobile, utilise la chaleur produite par un circuit 1 utilisant une partie du fluide caloporteur pour refroidir un groupe motopropulseur (non représenté) de manière connue en soi. Le dispositif de chauffage ici décrit, utilise un capteur 6 pour capturer une température T_{R} du circuit 1 de refroidissement connecté à l'ordinateur 8. Le capteur 6 de température permet de ne plus activer l'organe 7 de chauffage électrique lorsqu'une le valeur de température T_{R} du circuit de refroidissement indiquée par le capteur 6, est une supérieure ou égale à une température T_{sM} de seuil motopropulseur. Le rendement calorifique du fluide caloporteur alors porté à une température élevée, est alors sans commune mesure avec ce que peut raisonnablement produire un appareil de chauffage électrique.

De façon à ne pas chauffer inutilement la partie de fluide caloporteur qui est extérieure à l'habitacle 11, typiquement sous le capot moteur, le dispositif peut comprendre une vanne 9 de fermeture pilotée directement ou indirectement par l'ordinateur 8. La vanne 9, par exemple de type électrovanne à une ou deux bobines, permet en position fermée, d'empêcher la partie du fluide caloporteur utilisée dans le circuit 1 de refroidissement de pénétrer dans l'habitacle lorsque l'organe 7 de chauffage électrique est activé ou en phase d'activation.

La vanne 9 n'est pas nécessaire si on souhaite utiliser le dispositif pour contribuer à amener plus rapidement le moteur thermique à sa température optimale de fonctionnement.

Lorsque la température extérieure est très basse, il est intéressant d'activer l'organe 7 de chauffage électrique indépendamment des conditions d'optimisation de fonctionnement d'un autre organe du véhicule, de façon à pouvoir atteindre une température T_{H} du radiateur de l'habitacle (organe 5) supérieure ou égale à une température T_{sb} de seuil bas. Un capteur 4 connecté à l'ordinateur 8, permet de mesurer la température T_{H} du radiateur de l'habitacle pour réguler la température à l'intérieur de l'habitacle 11.

Les conditions ci-dessus évoquées et toute autre condition liée au fonctionnement des organes du véhicule sont aisément accessible par l'ordinateur de bord 8 de manière connue en soi sur le réseau local du véhicule, de type filaire, bus CAN, LIN, Ethernet automobile ou autre.

Une mémoire électronique de type permanente (non représentée), connue en soi, est hébergée dans l'ordinateur de bord 8 ou répartie dans divers ordinateurs dédiés du véhicule pour contenir un programme d'ordinateur pour mettre en œuvre l'invention.

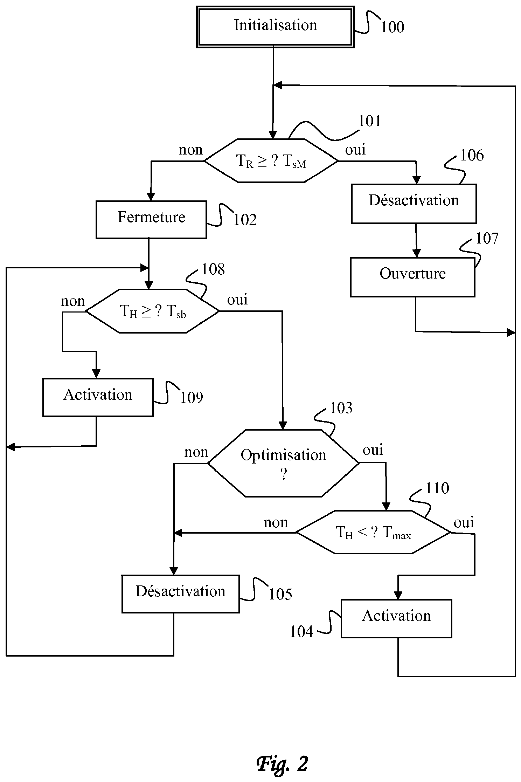

Le programme d'ordinateur comprend des instructions de code de programme pour l'exécution des étapes du procédé de chauffage de l'habitacle de véhicule, expliquées à présent en référence à la figure 2, lorsque le programme est exécuté sur un ou plusieurs ordinateurs

Procédé comportant un organe de chauffage électrique d'un, comprenant. Une étape 104 est prévue pour activer l'organe 7 de chauffage électrique du fluide caloporteur, par exemple en envoyant une tension de commande sur l'interrupteur 10 réalisé sous forme d'un transistor de puissance, d'un thyristor ou d'un contact de relais électromagnétique. Préalablement ou concomitamment à la tension de commande pour rendre passant l'interrupteur 10, une instruction de pilotage est envoyée à l'alternateur 3 pour lui faire débiter un courant électrique. L'utilisation de l'alternateur 3, ou de toute autre machine génératrice, est réalisable lorsque le moteur tourne. Une variante de mise en œuvre peut consister à alimenter l'organe 7 de chauffage électrique lorsque le moteur est à l'arrêt, au moyen d'une prise de courant sur le secteur 220 V, par exemple lors des phases de parking du véhicule. L'intérêt de cette étape 104 est d'accumuler des calories dans le radiateur 5 pendant une ou plusieurs périodes au cours desquelles il est économique de faire circuler un courant électrique dans l'organe 7 dédié ici au chauffage électrique, puis de diffuser ensuite continument dans l'habitacle, les calories ainsi accumulées dans le radiateur 5.

Le chauffage à inertie est généralement plus agréable que le chauffage de type convecteur, notamment en cas de délestage lié à la surcharge alternateur.

Le procédé est aussi applicable pour améliorer un rendement de climatisation non seulement en termes de chauffage mais aussi en termes de refroidissement, par exemple par fortes chaleurs extérieures. Le terme caloporteur utilisé pour qualifier le fluide n'est plus simplement lié à sa capacité d'accumuler et/ou de véhiculer des calories comme ci-dessus mais aussi d'accumuler et/ou de véhiculer des frigories. Un compresseur électrique remplace alors le thermoplongeur pour réaliser l'organe électrique 7.

La réalisation la plus simple et la moins coûteuse consiste à utiliser uniquement la montée ou la descente en température du fluide à phase constante, par exemple liquide. Une solution plus élaborée pourrait consister à utiliser un matériau à changement de phase, plus propice encore à accumuler des calories ou des frigories pour les diffuser ensuite de manière continue. Ceci nécessite cependant certains aménagements comme par exemple plusieurs étages d'échangeur qui peuvent se faire ressentir sur le coût global du véhicule.

Une étape 103 de détection de conditions d'optimisation de fonctionnement d'un autre organe du véhicule enclenche l'étape 104 d'activation lorsque ces conditions sont détectées.

Les conditions d'optimisation sont, suivant l'invention, relatives à un cycle de fonctionnement du groupe motopropulseur qui permet d'obtenir un meilleur rendement énergétique ou écologique lorsque le groupe motopropulseur produit un surplus d'énergie par rapport à celle qui serait juste nécessaire pour maintenir le régime ordinaire du groupe motopropulseur. En enclenchant l'étape 104, l'étape 103 permet alors d'accumuler le surplus d'énergie produit sur une courte période temporelle sous forme de calories, voire de frigories de façon à pouvoir le restituer ensuite de manière plus faiblement dosée sur une plus longue période temporelle.

De façon remarquable, les conditions d'optimisation concernent un ordre de ralentissement du véhicule qui constitue une source gratuite de production d'énergie électrique par conversion d'énergie cinétique du véhicule.

Lorsque les conditions d'optimisation ne sont pas ou ne sont plus vérifiées, l'étape 103 enclenche une étape 105 de désactivation. Pendant l'étape 105, les calories ou les frigories dans le cas d'un dispositif de chauffage, respectivement de production de froid, continuent de diffuser dans l'habitacle 11 à partir du radiateur 5 où elles ont été accumulées.

Une étape 108 de contrôle d'une température T_{H} du radiateur de l'habitacle contenue dans une plage de température de confort, permet d'enclencher l'étape 103 uniquement si la température T_{H} du radiateur de l'habitacle est effectivement contenue dans cette plage de température de confort.

L'étape 108 représentée sur la figure 2, illustre le procédé dédié au chauffage.

Une étape 109 active alors les moyens de chauffage électrique de façon comparable à l'étape 104 mais indépendamment de l'étape 103 de détection lorsque dans ce cas, la température T_{H} du radiateur de l'habitacle est inférieure à une température T_{sb} de seuil bas de la plage de température de confort qui correspond à une température minimale appréciable pour un usager du véhicule. On peut prévoir une possibilité de régler la température T_{sb} de seuil bas par l'usager et/ou un talon de sécurité minimal contenu en mémoire de l'ordinateur de bord.

L'homme du métier peut aisément retranscrire l'enseignement de l'invention à un procédé dédié au refroidissement.

Une étape comparable à l'étape 109 active dans ce cas des moyens de refroidissement électrique indépendamment de l'étape 103 de détection lorsque la température T_{H} du radiateur de l'habitacle est supérieure à une température Tₛₕ de seuil haut de la plage de température de confort qui correspond à une température maximale appréciable ou admise pour l'usager du véhicule. On peut prévoir une possibilité de régler la température Tₛₕ de seuil haut par l'usager et/ou un talon de sécurité maximal contenu en mémoire de l'ordinateur de bord.

Lorsqu'une partie du fluide caloporteur est utilisée dans un circuit de refroidissement du groupe motopropulseur du véhicule, une étape 101 de vérification de température T_{R} du circuit de refroidissement, enclenche l'étape 103 de détection, directement ou indirectement après être passé par l'étape 108, lorsque la température T_{R} du circuit de refroidissement est inférieure à une température T_{sM} de seuil du groupe motopropulseur. La température T_{sM} de seuil du groupe motopropulseur correspond à l'atteinte par le groupe motopropulseur de sa température de fonctionnement nominal.

L'étape 101 est enclenchée à la suite d'une étape 100 d'initialisation, généralement activée à la mise en route du groupe motopropulseur alors que ce dernier est encore froid.

L'étape 101 est aussi enclenchée à la suite de l'étape 104 de façon à enclencher une étape 106 de désactivation de l'organe 7 de chauffage électrique lorsque ce dernier n'est plus utile, notamment lorsque la température du fluide caloporteur en provenance du circuit de refroidissement, est suffisante pour chauffer l'habitacle.

De façon à ne pas dépenser d'énergie pour chauffer la partie de fluide caloporteur qui, dans le circuit de refroidissement, a pour but de refroidir le groupe motopropulseur, le procédé comprend une étape 102 d'isolement entre le circuit de refroidissement 1 et le radiateur 5. Par exemple une fermeture de la vanne 9 évite au fluide caloporteur de retourner du radiateur 5 vers le circuit 1 de refroidissement du groupe motopropulseur en empêchant la partie du fluide caloporteur utilisée dans le circuit de refroidissement de pénétrer dans l'habitacle.

Pour éviter une surchauffe du radiateur ou organe 5, on peut prévoir une étape 110 de test qui précède l'étape 104 d'activation de façon à couper l'alimentation du thermoplongeur 7 si on détecte que la température du radiateur 5 est supérieure à une température maximale. Cette sécurité sur la température évite d'enclencher l'étape 104 lorsqu'il y a trop de calories dans le radiateur de l'habitacle.

## Revendications

1. Procédé de climatisation par chauffage, d'un habitacle de véhicule comportant un organe de climatisation par chauffage électrique d'un fluide caloporteur circulant dans un radiateur logé dans l'habitacle, comprenant une étape (104) d'activation dudit organe électrique, une étape (103) de détection de conditions d'optimisation de fonctionnement d'un autre organe du véhicule qui enclenche ladite étape (104) d'activation lorsque les dites conditions sont détectées, **caractérisé en ce que** lesdites conditions d'optimisation concernent celles liées à un couple de fonctionnement minimal du moteur pour obtenir un meilleur rendement énergétique et/ou antipollution.

2. Procédé selon la revendication 1, **caractérisé en ce que** ledit organe électrique est immergé dans ledit radiateur.

3. Procédé selon l'une des revendications 1 ou 2, **caractérisé en ce qu'**une partie du fluide caloporteur étant utilisée dans un circuit de refroidissement d'un groupe motopropulseur du véhicule, il comprend une étape (101) de vérification de température (T_{R}) du circuit de refroidissement supérieure ou égale à une température (T_{sM}) de seuil du groupe motopropulseur qui enclenche directement ou indirectement ladite étape (103) de détection lorsque ladite température (T_{R}) du circuit de refroidissement est inférieure à la température (T_{sM}) de seuil du groupe motopropulseur.

4. Procédé selon la revendication 3, **caractérisé en ce qu'**il comprend une étape (102) de fermeture d'une vanne pour empêcher la partie du fluide caloporteur utilisée dans le circuit de refroidissement de pénétrer dans le radiateur logé dans l'habitacle.

5. Procédé selon l'une des revendications 1 à 4, **caractérisé en ce qu'**il comprend une étape (109) d'activation de moyens de chauffage électrique indépendante de ladite étape (103) de détection lorsqu'une température (T_{H}) du radiateur de l'habitacle est inférieure à une température (T_{sb}) de seuil bas.

6. Procédé selon la revendication 1, **caractérisé en ce que** ledit organe est un compresseur électrique pour le refroidissement de l'habitacle.

7. Programme d'ordinateur comprenant des instructions de code de programme pour l'exécution des étapes du procédé selon l'une des revendications 1 à 6 lorsque ledit programme est exécuté sur un ou plusieurs ordinateurs.

8. Dispositif de climatisation, par chauffage d'un habitacle de véhicule comprenant un organe (7) de climatisation, par chauffage électrique d'un fluide caloporteur circulant dans un radiateur (5) logé dans l'habitacle (11), au moins un ordinateur de bord (8) comprenant un programme d'ordinateur structuré pour activer ledit organe (7) électrique lorsque des conditions d'optimisation de fonctionnement d'un autre organe du véhicule sont détectées, **caractérisé en ce que** ledit autre organe est un moteur qui comporte des conditions d'optimisation de fonctionnement à couple minimal pour obtenir un meilleur rendement énergétique et/ou antipollution.

9. Dispositif selon la revendication 8, **caractérisé en ce que** ledit organe (7) électrique activé est immergé dans ledit radiateur (5).

10. Dispositif selon l'une des revendications 8 à 9, **caractérisé en ce qu'**il comprend un circuit (1) de refroidissement d'un groupe motopropulseur utilisant une partie du fluide caloporteur, un capteur (6) de température (T_{R}) du circuit de refroidissement connecté à l'ordinateur (8) pour autoriser d'activer ledit organe (7) de chauffage électrique lorsque le capteur (6) indique une valeur de température (T_{R}) du circuit de refroidissement inférieure à une température (T_{sM}) de seuil du groupe motopropulseur.

11. Dispositif selon la revendication 10, **caractérisé en ce qu'**il comprend une vanne (9) de fermeture pilotée directement ou indirectement par l'ordinateur (8) pour empêcher la partie du fluide caloporteur utilisée dans le circuit de refroidissement de pénétrer dans le radiateur logé dans l'habitacle lorsque ledit organe (7) de chauffage électrique est activé.

12. Dispositif selon l'une des revendications 8 à 11, **caractérisé en ce qu'**il comprend un capteur (4) de température (T_{H}) du radiateur de l'habitacle connecté à l'ordinateur (8) pour activer les moyens de chauffage électrique indépendamment des conditions d'optimisation de fonctionnement dudit autre organe du véhicule lorsqu'une température (T_{H}) du radiateur de l'habitacle est inférieure à une température (T_{sb}) de seuil bas.

13. Dispositif selon l'une des revendications 8 à 12, **caractérisé en ce qu'**il comprend un alternateur (3) piloté par l'ordinateur (8) de façon à alimenter ledit organe (7) de climatisation électrique lorsque le véhicule reçoit un ordre de ralentissement.

## Patentansprüche

1. Verfahren zur Klimatisierung durch Heizen eines Fahrzeuginnenraums, mit einem Bauteil zur Klimatisierung durch elektrisches Aufheizen eines in einem im Innenraum untergebrachten Heizkörper zirkulierenden Wärmeträgerfluids, das einen Schritt (104) der Aktivierung des elektrischen Bauteils, einen Schritt (103) der Erfassung von Betriebsoptimierungsbedingungen eines anderen Bauteils des Fahrzeugs enthält, der den Aktivierungsschritt (104) auslöst, wenn die Bedingungen erfasst werden, **dadurch gekennzeichnet, dass** die Optimierungsbedingungen diejenigen betreffen, die mit einem minimalen Betriebsmoment des Motors verbunden sind, um einen besseren energetischen und/oder umweltschützenden Wirkungsgrad zu erhalten.

2. Verfahren nach Anspruch 1, **dadurch gekennzeichnet, dass** das elektrische Bauteil in den Heizkörper eingebettet ist.

3. Verfahren nach einem der Ansprüche 1 oder 2, **dadurch gekennzeichnet, dass** es, da ein Teil des Wärmeträgerfluids in einem Kühlkreislauf einer Antriebseinheit des Fahrzeugs verwendet wird, einen Schritt (101) der Überprüfung (T_{R}) der Temperatur des Kühlkreislaufs höher als eine oder gleich einer Schwellentemperatur (T_{sM}) der Antriebseinheit enthält, der den Erfassungsschritt (103) direkt oder indirekt auslöst, wenn die Temperatur (T_{R}) des Kühlkreislaufs niedriger ist als die Schwellentemperatur (T_{sM}) der Antriebseinheit.

4. Verfahren nach Anspruch 3, **dadurch gekennzeichnet, dass** es einen Schritt (102) des Schließens eines Ventils enthält, um den im Kühlkreislauf verwendeten Teil des Wärmeträgerfluids daran zu hindern, in den im Innenraum untergebrachten Heizkörper einzudringen.

5. Verfahren nach einem der Ansprüche 1 bis 4, **dadurch gekennzeichnet, dass** es einen Schritt (109) der Aktivierung von elektrischen Heizeinrichtungen unabhängig vom Erfassungsschritt (103) enthält, wenn eine Temperatur (T_{H}) des Heizkörpers des Innenraums niedriger als eine untere Schwellentemperatur (T_{sb}) ist.

6. Verfahren nach Anspruch 1, **dadurch gekennzeichnet, dass** das Bauteil ein elektrischer Kompressor zum Kühlen des Innenraums ist.

7. Computerprogramm, das Programmcodeanweisungen zur Ausführung der Schritte des Verfahren nach einem der Ansprüche 1 bis 6 enthält, wenn das Programm auf einem oder mehreren Computern ausgeführt wird.

8. Vorrichtung zur Klimatisierung durch Heizen eines Fahrzeuginnenraums, die ein Bauteil zur Klimatisierung (7) durch elektrisches Aufheizen eines in einem im Innenraum (11) untergebrachten Heizkörper (5) zirkulierenden Wärmeträgerfluids enthält, wobei mindestens ein Bordcomputer (8) ein Computerprogramm enthält, das strukturiert ist, um das elektrische Bauteil (7) zu aktivieren, wenn Betriebsoptimierungsbedingungen eines anderen Bauteils des Fahrzeugs erfasst werden, **dadurch gekennzeichnet, dass** das andere Bauteil ein Motor ist, der Betriebsoptimierungsbedingungen bei minimalem Drehmoment aufweist, um einen besseren energetischen und/oder umweltschützenden Wirkungsgrad zu erhalten.

9. Vorrichtung nach Anspruch 8, **dadurch gekennzeichnet, dass** das aktivierte elektrische Bauteil (7) in den Heizkörper (5) eingebettet ist.

10. Vorrichtung nach einem der Ansprüche 8 bis 9, **dadurch gekennzeichnet, dass** sie einen Kühlkreislauf (1) einer Antriebseinheit, der einen Teil des Wärmeträgerfluids verwendet, einen Fühler (6) einer Temperatur (T_{R}) des Kühlkreislaufs verbunden mit dem Computer (8) enthält, um die Aktivierung des elektrischen Heizbauteils (7) zu erlauben, wenn der Fühler (6) einen Temperaturwert (T_{R}) des Kühlkreislaufs niedriger als eine Schwellentemperatur (T_{sM}) der Antriebseinheit anzeigt.

11. Vorrichtung nach Anspruch 10, **dadurch gekennzeichnet, dass** sie ein Schließventil (9) enthält, das direkt oder indirekt vom Computer (8) gesteuert wird, um den im Kühlkreislauf verwendeten Teil des Wärmeträgerfluids daran zu hindern, in den im Innenraum untergebrachten Heizkörper einzudringen, wenn das elektrische Heizbauteil (7) aktiviert ist.

12. Vorrichtung nach einem der Ansprüche 8 bis 11, **dadurch gekennzeichnet, dass** sie einen Fühler (4) einer Temperatur (T_{H}) des Heizkörpers des Innenraums enthält, der mit dem Computer (8) verbunden ist, um die elektrischen Heizeinrichtungen unabhängig von den Betriebsoptimierungsbedingungen des anderen Bauteils des Fahrzeugs zu aktivieren, wenn eine Temperatur (T_{H}) des Heizkörpers des Innenraums niedriger als eine untere Schwellentemperatur (T_{sb}) ist.

13. Vorrichtung nach einem der Ansprüche 8 bis 12, **dadurch gekennzeichnet, dass** sie einen Wechselstromgenerator (3) enthält, der vom Computer (8) gesteuert wird, um das elektrische Klimatisierungsbauteil (7) zu speisen, wenn das Fahrzeug einen Bremsbefehl empfängt.

## Claims

1. Method for air conditioning, by heating, a vehicle interior comprising an air conditioning member based on electric heating of a heat-transfer fluid circulating in a radiator housed in the interior, comprising a step (104) of activation of said electric member, a step (103) of detection of conditions for optimizing operation of another member of the vehicle which triggers said activation step (104) when said conditions are detected, **characterized in that** said optimization conditions concern those linked to a minimum operating torque of the engine to obtain a better energy and/or antipollution efficiency.

2. Method according to Claim 1, **characterized in that** said electric member is immersed in said radiator.

3. Method according to one of Claims 1 and 2, **characterized in that**, a part of the heat-transfer fluid being used in a cooling circuit of a power train of the vehicle, it comprises a step (101) of checking for temperature (T_{R}) of the cooling circuit greater than or equal to a threshold temperature (T_{sM}) of the power train which directly or indirectly triggers said detection step (103) when said temperature (T_{R}) of the cooling circuit is lower than the threshold temperature (T_{sM}) of the power train.

4. Method according to Claim 3, **characterized in that** it comprises a step (102) of closure of a valve to prevent the part of the heat-transfer fluid used in the cooling circuit from penetrating into the radiator housed in the interior.

5. Method according to one of Claims 1 to 4, **characterized in that** it comprises a step (109) of activation of electric heating means independent of said detection step (103) when a temperature (T_{H}) of the radiator of the interior is lower than a low threshold temperature (T_{sb}) .

6. Method according to Claim 1, **characterized in that** said member is an electric compressor for cooling the interior.

7. Computer programme comprising programme code instructions for executing steps of the method according to one of Claims 1 to 6 when said programme is run on one or more computers.

8. Air-conditioning device, by heating of a vehicle interior comprising an air-conditioning member (7), by electric heating of a heat-transfer fluid circulating in a radiator (5) housed in the interior (11), at least one onboard computer (8) comprising a computer programme structured to activate said electric member (7) when conditions for optimizing operation of another member of the vehicle are detected, **characterized in that** said other member is a motor which comprises conditions for optimizing operation at minimum torque to obtain a better energy and/or antipollution efficiency.

9. Device according to Claim 8, **characterized in that** said activated electric member (7) is immersed in said radiator (5).

10. Device according to one of Claims 8 and 9, **characterized in that** it comprises a cooling circuit (1) for a power train using a part of the heat-transfer fluid, a sensor (6) of temperature (T_{R}) of the cooling circuit connected to the computer (8) to allow activation of said electric heating member (7) when the sensor (6) indicates a temperature value (T_{R}) of the cooling circuit lower than a threshold temperature (T_{sM}) of the power train.

11. Device according to Claim 10, **characterized in that** it comprises a closure valve (9) driven directly or indirectly by the computer (8) to prevent the part of the heat-transfer fluid used in the cooling circuit from penetrating into the radiator housed in the interior when said electric heating member (7) is activated.

12. Device according to one of Claims 8 to 11, **characterized in that** it comprises a sensor (4) of temperature (T_{H}) of the radiator of the interior connected to the computer (8) to activate the electric heating means independently of the conditions for optimizing operation of said other member of the vehicle when a temperature (T_{H}) of the radiator of the interior is lower than a low threshold temperature (T_{sb}).

13. Device according to one of Claims 8 to 12, **characterized in that** it comprises an alternator (3) driven by the computer (8) so as to power said electric air-conditioning member (7) when the vehicle receives a command to slow down.
